# EUROPEAN PATENT SPECIFICATION

(11) **EP 2 874 037 B1**
(45) Date of publication and mention of the grant of the patent: **12.02.2020**
(21) Application number: 13752693.5
(22) Date of filing: 11.07.2013
(51) Int. Cl.: G05D 1/02

(54) **AUTONOMOUS ALL TERRAIN ROBOTICS VEHICLE**
AUTONOMES GELÄNDEROBOTERFAHRZEUG
VÉHICULE TOUT-TERRAIN ROBOTISÉ ET AUTONOME

(30) Priority: 11.07.2012 PT 12106439
(43) Date of publication of application: 20.05.2015
(73) Proprietor: Introsys - Integration for Robotic Systems-Integração de Sistemas Robóticos, S.A., 2860-274 Moita (PT)
(72) Inventor: FIGUEIREDO SANTANA, Pedro, 2820-468 Charneca da Caparica (PT); BENTES MOITA FLORES, Luís Miguel, 2925-029 Azeitão (PT); BENTES MOITA FLORES, Nuno Manuel, 2925-029 Azeitão (PT); DA SILVA GUEDES, MAGNO Edgar, 2910-766 Setúbal (PT); MARTINS DEUSDADO, Pedro Miguel, 2805-067 Almada (PT); DA CRUZ HENRIQUES, Nuno Andrade, 1479-016 Lisboa (PT); PARREIRA E CORREIA, Luís Miguel, 1749-016 Lisboa (PT)
(74) Representative: Pereira da Cruz, Joao
(86) International application number: PCT/PT2013/000041
(87) International publication number: WO 2014/011068

(56) References cited:
- WO-A2-2012/091804
- US-A- 5 440 916
- V SANTOS ET AL: "Developments on a system for Human-Robot teams", PROCEEDINGS OF SCIENTIFIC CONFERENCE 7TH EDITION NATIONAL ROBOTICS FESTIVAL (ROBÓTICA 2007), 27 April 2007 (2007-04-27), XP055133354, Paderne, Portugal
- PEDRO F SANTANA ET AL: "Sustainable Robots for Humanitarian Demining", INTERNATIONAL JOURNAL OF ADVANCED ROBOTIC SYSTEMS, vol. 4, no. 2, 30 December 2007 (2007-12-30), pages 207-218, XP055133500, ISSN: 1729-8806, DOI: 10.5772/5695
- Pedro Santana ET AL: "The Ares Robot: Case Study of an Affordable Service Robot" In: "Field and Service Robotics", 27 March 2008 (2008-03-27), Springer Berlin Heidelberg, Berlin, Heidelberg, XP055133327, ISSN: 1610-7438 ISBN: 978-3-54-075404-6 vol. 44, pages 33-42, DOI: 10.1007/978-3-540-78317-6_4, page 33 - page 35; figures 1,3 page 38 - pages 39,41

## Description

### Technical field of the invention

The present invention belongs to the field of mobile robotics. Mobile robotics is still a hot topic for scientific research. More than a simple servant tool, mobile robots can go far beyond typical task driven scenarios. In fact, these mobile platforms have been used for many purposes, from human companion and assistance to test-beds for AI models and perception algorithms. Therefore, the need for versatile and easy deployment systems to carry all the energy, sensors and computation required for complex applications makes the use of a mobile robot quite appealing. The present invention addresses this problem, presenting a multipurpose versatile platform solution for outdoor remote operations in all-terrain and demanding environments, intended to cope with professional service and research requirements.

### Prior art of the invention

Although current indoor solutions have achieved a very acceptable degree of performance, a set of open challenges are still present in the outdoor domain. Autonomous navigation is highly dependent on the quality of perceptional sensory data, which include self-positioning issues related to odometry estimation, and robust obstacle detection. Mechatronics, for instance, can reduce navigation related software complexity by offering an adequate solution for robot locomotion in demanding environments. Consequently, the robot must negotiate with the adversities of the terrain while being able to surpass obstacles in the most effective manner possible, that is without getting stuck or inducing too much wheel slip while performing long duration tasks. Outdoor operations are particularly interesting, namely search and rescue missions, patrol and reconnaissance, humanitarian demining, environment monitoring, or agriculture. All these scenarios require the mobile platform to navigate safely and robustly in rough terrains and under stringent environmental conditions.

The most popular approach for solving the locomotion problem in the outdoors is to use tracks instead of wheels. However, if on the one hand tracks offer more traction in complex terrains and are less prone to slip, on the other hand the inherent use of skid steering results in unreliable odometry estimation and considerable energy loss. Also, using tracks hampers the ability to surpass prominent obstacles as the height to ground is significantly reduced. Other solutions have been proposed such as spherical shaped robots and legged platforms. However, while the first are inadequate for use in sloppy terrains, the latter require a complex control system and energy in order to stay balanced, which hampers autonomy.

This invention presents a wheeled based locomotion mechanism designed to reduce slippage and maximize traction power. This can be achieved by ensuring that wheel direction accompanies the movement while staying in permanent contact to the ground. To solve this problem and attain quasi-omnidirectional motion, the present invention is equipped with four wheels independently controlled in both steering and traction. Furthermore, with a longitudinal passive axis, the robot navigates in bumpy terrains in a compliant way, i.e. without losing four wheels traction.

A research on the state of art of the invention was made in order to ascertain the novelty of the same. The prior art is represented by the following patent documents:
(D1) V SANTOS ET AL: "Developments on a system for Human-Robot teams", PROCEEDINGS OF SCIENTIFIC CONFERENCE 7TH EDITION NATIONAL ROBOTICS FESTIVAL (ROBÓTICA 2007), 27 April 2007, XP055133354, Paderme, Portugal;
(D2) PEDRO F SANTANA ET AL: "Sustainable Robots for Humanitarian Demining", INTERNATIONAL JOURNA OF ADVANCED ROBOTIC SYSTEMS, vol. 4, no. 2, 1 January 2007, pages 207-218, XP055133500, ISSN: 1729-8806, DOI; 10.5772/5695;
(D3) US 5440916 A (STONE HENRY), 15 August 1995;
(D4) WO 2012/091804 A2 (ROBOT CORP) 5 July 2012;
(D5) Pedro Santana ET AL: "The Ares Robot: Case Study of an Affordable service Robot", in "Field and Service Robots", 27 march 2008, Springer berlin Heidelberg, Berlin, Heidelberg, XP05513327, ISSN: 1610-7438, ISBN: 978-3-54-075404-6, vol.44, pages 33-42, DOI: 10.1007/978-3-540-78317-6_4.

### Description of the invention

The hardware architecture of the present invention was designed to provide a robotic solution that could be:
a) cost effective and durable while operating in all-terrain and all-weather environments - this technical effect is achieved with the conceptualization of a weatherproofed chassis made of durable materials;
b) ideal for supporting semi- and fully-autonomous control systems - this technical effect is achieved with no-slip quasi-omnidirectional locomotion capabilities so it allows optimal odometry calculation and low energy footprint.

Intended to work in outdoor real world applications, the mechanical structure takes a key role not only in guaranteeing resistance against externally applied forces, but also in weatherproofing the electrical and electronic components, maintaining functionality, reliability, and safety in its use. Aluminum was the chosen material for the chassis due to its light weight, strength, corrosion resistance, flexibility, thermal conductivity, ductility, and cost efficiency. By using an alloy version of this material, some properties are reinforced, still maintaining light weight, and as a result a highly tough structure is obtained. Also, it enables the construction of a fully sealed system without the need for active cooling fans.

The chassis of the present invention is composed of two boxes hermetically closed to the outside and communicating centrally through the hole Ø55 of the central hub for any electrical connections. Each box (Box A - Box B) (1)(3) has a drawer on PVC guides for the insertion of the battery packs.

Locomotion is achieved by a 4x4 independent wheeled system, which provides up to five types of movement. A longitudinal passive axis is also present for enabling the robot to navigate in compliance with the topology of bumpy terrains. Combined they offer the capability to survive and navigate in almost all conditions.

Each motor (7) (8) is directly coupled to its corresponding wheel through a gear. The absence of chains or belts not only reduces energy loss but also the number of failure points. The aggregated power of all motors (7) (8) (exceeding 1 kW maximum) allows the robot to navigate at up to 1.5 m/s and surpass up to 40° incline slopes.

Another issue related with this type of applications and usually disregarded concerns logistics and transportation. Besides its dimension and weight, the present invention includes some characteristics to facilitate its manual transportation:
1. each wheel permits hand locking and has a manual clutch;
2. the longitudinal passive axis can also be locked in the central position.

To support the control system, high level applications and software modules, this invention presents a modular hardware architecture mainly comprised of commercial off-the-shelf components. This design comprises the need for flexibility (i.e., plug-in and plug-out devices with minimal reconfigurability procedure), reliability, and easy maintenance.

The main processing unit of the robot is composed of an Intel i7 industrial board. From there a multiplicity of sensors feed the computer with required information to navigate and create a map of the world. Global positioning of the robot, together with its position to the ground plane and acceleration on the several axes, is gathered by an inertial measurement unit with a built-in global positioning system (GPS) device. A laser unit, mounted on a servo drive, is used for spatial awareness and obstacle avoidance. For short range obstacle detection, the platform has a ring of ultrasonic sensors covering the periphery of the robot. For self-monitoring and diagnosis, the robot integrates several internal sensors responsible for gathering temperature readings, voltage and current drawn, and controlling the health of the battery. Problems that might occur are detected by these sensors and appropriate measures are taken, which might result in a defective device being shut down and backed up.

In another section, almost completely independent of the first, there is a closed video circuit. Two types of video feed are used. The first group, composed by several small cameras, shows the close surroundings, helping to navigate through the terrain and showing obstacles. The second is a pan, tilt and zoom (PTZ) camera with high zoom and low light requirement. These are important characteristics for surveillance tasks. The control center is, among other things, responsible for autonomously controlling the position of the camera.

Two types of devices can be used to control the robot: control center and short range controller. The latter is only used for line of sight teleoperation. On the other side, the control center is a fully functional control unit for the robot. It has a powerful fully rugged computer, a screen and a pair of rugged joysticks, allowing both direct teleoperation of the robot and mission driven high level operation (e.g., by feeding the robot with a pre-defined path drawn on a geo-referenced map). When on teleoperation, computer receives the commands from the joysticks and delivers them to the robot computer which in turn will deliver them to motor controllers or the PTZ camera, depending on which joystick unit the user is using. The screen, on the other side, is used for displaying video feed from the on-board cameras.

Considering these two control units the robot has five communication mediums. The short range control has cable and wireless option. The control center offers three alternatives, wireless mode up to 1 Km, infrastructure when the robot uses existing wireless network to communicate with control center, and tether mode. This last option relies on a long cable for data and power transmission in places where wireless is not viable, allowed or secure.

Expansion module is another feature available. The structure was devised in such a way that all kinds of sensors (temperature, radiation, mines, humidity, metal detection) can be added with no requirement for external power due to voltages lines directly available in the same connectors used for data communication. Additional computing power, video and manipulators can also be added with a minimum amount of effort.

A multi-purpose robot may be distinguished for its ability not only to operate in different scenarios, but also to support both the integration of additional sensors and/or computational units, and additional software modules (e.g., collision-free navigation and human-robot interaction). This must be reflected in a flexible and modular software architecture capable of abstracting hardware and individual applications in a standardized manner, so that upgrades and downgrades can be done just by plugging in and out modules with standardized interfaces.

The software architecture of the present invention was designed in order to support interactions with logging, diagnostics and human-machine interfaces with proper hierarchy along the abstraction layers and the mesh of network interconnections. The input and output (I/O) of the several built-in and add-on hardware devices is also supported. The feed from the devices is streamed across the network through a low latency conceptual service bus, which allows a set of nodes to efficiently share data.

The top layer of the software architecture encompasses the human-robot interface and high-level algorithms, which aggregate data from the on-board sensors and produce information for decision support and navigation aid. Conversely, the bottom layer includes the software components directly connected to the hardware devices and software modules connecting and giving access to upper layers. Intermediate layers help build the remaining functionality of a multi-purpose robot.

The main software modules are briefly described hereunder:
Human-Machine Interface: this component has the role of mediation between human agents and the robot. It provides the human operator with relevant information about the current robot state required for proper decision making. That is, all relevant sensory and telemetric data is presented, accompanied with the feed from the on-board cameras. Interaction between the human and the robot is permitted not only to directly teleoperate the robot but also to correct or improve desired behavior when the latter is in autonomous mode. An additional built-in browser gives access to relevant Web cloud services such as geographical positioning and mapping and face recognition, the first having been improved to allow drawing desired trajectories and overlay current robot position, detected obstacles, planned paths, etc.
Application: this component is where the higher level logic processing algorithms reside. It includes the robot's kinematic modeling, obstacle detection, path planning, self-monitoring, and error recovery. For flexibility, it allows the addition of software modules by maintaining a graph structure interfaced with standardized inter-process communication messages (as will be described below).
Repository: this component serves the purpose of storage for all persistent data and processed information. It is organized as files in a tree-based file system available across software modules.
Device drivers: these are critical to interface the sensors and actuators with the information system inside the robot. They mediate between hardware connected replaceable devices producing raw data, and the main robot processing center with a data format common across modules.
Service bus: represents a common interface to process communication (services and messages) between all software modules.

In order to comply with the requirements of flexibility and modularity, the control system of the present invention is fully compliant with the Robot Operating System (ROS), which is a free and open source software framework maintained by Willow Garage that is becoming a de facto standard in research-oriented and commercial-oriented robotics. ROS provides standard operating system services such as hardware abstraction, low-level device control, implementation of commonly used functionality, message-passing between processes, and package management. It is based on graph architecture in which processing takes place in nodes that may receive, post, and multiplex sensor control, state, planning, actuator, and other messages. It is also a provider of distributed computing development including libraries and tools for obtaining, writing, building, and running applications across multiple computers.

The control system of the present invention respects the ROS syntax in terms of the concept of nodes and topics for messaging. Nodes interact through a publish subscribe messaging mechanism using the topic concept. Nodes, as processes inside ROS, can have several functionalities.

The present invention is equipped with the following custom nodes :
Locomotion control: as part of the device drivers layer, the locomotion control node is responsible for solving the inverse kinematics problem taking into account the motion command coming from the navigation stack (see below) in the form of an ROS standard message sensor - msgs/JointState. This message encompasses both motor (7)(8) position and velocity information. The same messages are used to publish encoder data as well, which are then consumed by the odometry node (see below).
Odometry: in the application layer, the odometry node is responsible for estimating motor (7)(8) position and velocity according to motion commands and based on the robot's modeled kinematics. It interacts with the locomotion control node by publishing motor (7)(8) position and velocity as sensor - msgs/JointState messages and receiving the encoder's values in order to estimate robot's pose and displacement, which are then re-published in the form of nav msgs/Odometry messages. Motion commands are acquired by subscribing to standard ROS messages geometry msgs/Twist which contains desired linear and angular velocities.
Navigation: the navigation stack is a group of nodes in charge of both path planning and obstacle avoidance behaviors. By receiving and fusing sensory information (sensor msgs/LaserScan, sensor msgs/IMU), position and velocity estimates (nav msgs/Odometry), and desired goal poses (msgs PoseStamped), provided respectively by the perception nodes, odometry and control GUI, it publishes a path to the desired goal as well as the next angular and linear velocities (geometry - msgs/Twist) to the locomotion control node.
Teleoperation: this node is responsible for the interfacing with joysticks for teleoperation purposes. This node acquires desired velocity, heading, and locomotion mode from the joystick and produces corresponding angular and linear velocities, which are then published as standard ROS messages geometry - msgs/Twist to the system.
Control GUI: included in the human-machine interface layer, the control Graphical User Interface (GUI) node has the function of representing sensory data, current robot state, and diagnostic in a human readable manner. This information is available in both online and offline modes. Offline access to information is done using the built-in logging facilities provided by ROS. Also through this node, the human operator is able to change the system's parameters. Finally, this node includes support to visualization and simulation tools via the built-in Rviz and Gazebo modules, respectively (see fig 8).
Augmented camera: displays the surveillance camera feed images and processes video frames for human faces detection. It also allows the human operator to take a snapshot of a scene (hitting a default key). For the orientation a bearing pointer is displayed in the lower right corner, it is fed with data from the robot GPS sensor, rotating and pointing to the next path planned direction to be taken. Several optimizations were implemented to avoid unneeded computation such as slight movements of the robot.
Map trail: shows the real robot path over a map using geographical coordinates from the robot GPS and Google Maps JavaScript library API. It enables drawing and overlaying several paths on a real terrain description. The human operator may interact with the map marking points (directly translated to geographical coordinates) and defining new paths. Each point (marker) auto connects a line with the previous one, thus creating a continuous path. Grabbing and dragging inner path points splits the marker in two and creates one more segment whilst changing the path way. Locking and unlocking is useful to avoid adding one more marker inadvertently when the action is to drag and pan the map. The left path browser panel is used to maintain a list of the paths and select the current one.

Additionally, as the device drivers for some of the robot's components were available in the form of ROS packages, they were easily integrated in the basic control system. Namely:
Laser Scan: available in the package LMS1xx, this device driver interfaces with the SICK LMS111 laser scanner device on the robot publishing the range readings as standard ROS messages sensor msgs/LaserScan.
IMU: from the package lse _xsens _mti, this node obtains pose readings from the Xsens MTi-G inertial measurement unit on the robot publishing them as standard ROS messages sensor msgs/IMU. Also, geographical coordinates are published using the sensor msgs/NavSatFix messages.

Other sensor modalities (e.g., stereo sensors, time of flight cameras, sonars) are also available under the same rationale.

This architecture enables basic functionality, such as human-controlled teleoperation and autonomous way point navigation. It also allows for simple integration of additional utility modules. However, robustness for long operations can only be achieved by an adequate supporting diagnostic and recovery mechanism. This will be detailed in the next section.

### Diagnosis and Recovery

The diagnostic system is designed to collect information from the present invention hardware and software modules for the purpose of analysis, troubleshooting, and logging.

This system is fully supported by ROS, as it provides a standard diagnostic tool chain for collecting, publishing, analyzing and viewing diagnostic data. In particular, all nodes publish standard ROS diagnostic msgs/DiagnosticStatus messages on the /diagnostics topic. A diagnostic aggregator node subscribes to the /diagnostics topic, processes and categorizes the raw diagnostic data (i.e., categorizing by system components), and republishes it on /diagnostics agg topic.

The aggregated diagnostic output can be displayed by standard ROS tools for viewing diagnostic data. However, these tools are generic and simple, and they offer no user control over nodes processes when needed, as in the case of unrecoverable errors. Therefore, a custom graphical user interface was designed. In this interface, each system component is represented by a square icon, placed on its corresponding physical location over the present invention background image. The diagnostic status of each system component is indicated by the color on the respective icon border. The set of diagnostic status is defined as OK, Warning, Error or Stale, and the possible colors are green, orange, red or blue, respectively. For instance, the battery system shows an orange color, indicating a warning status. The Stale status is attributed when the respective standard ROS diagnostic msgs/DiagnosticStatus messages stopped from being published. When the user clicks on the magnifying glass icon, on the diagnostic panel depicted in Fig. 9, a global and detailed diagnostic report with the option to shut down the system is displayed.

Supported by the diagnostic is the error recovery mechanism. This process was designed to act every time a system failure is reported, thus reducing human intervention in error recovery. Embedded in the control system architecture as an independent ROS node, the error recoverer gathers data from the diagnostic aggregator and subscribes to the most critical topics, namely the ones sharing data about locomotion commands and device interfacing. This allows not only controlling the running state of each node, but also the validity of orders and commands being passed between nodes. In fact, the error recovery is aware of the system safety parameters, which are accessible on the repository module. Consequently, it has the ability to act as a filter for invalid or unsafe actuation commands. For the sake of clarity, one can imagine the situation when a human operator wants the robot to move at its maximum velocity but the diagnosis reports motor overheating or low power. In this case, the error recovered intervenes by lowering the value of the maximum permissible velocity from the system parameters, thus preventing cracking the motors or running out of power. Finally, the error recovery has a built-in service server to respond to active fail reports by the individual modules. That is, each node can report a local critical failure (e.g., a motor's device driver unable to communicate with the hardware component) directly to the error recovered, thus reducing response time. In this situation, the error recovered acts on the global system (halting the robot and putting all locomotion commands on hold) and tries to solve the error (e.g., by resetting the device or changing configuration), before requesting human intervention.

### Results

In order to predict chassis resistivity, stress tests were carried out using a finite element analysis on the mechanical structure. These not only guarantee that it complies with initial requirements but also that the robot is able to cope with tough terrain conditions. Simulation software chosen was Autodesk ANsys. The central joint (2) connecting the boxes (1)(3) and the transmission units supporting the wheels were the main subjects of analysis. Due to the fact that they have wheels attached, a two stage test was performed on the latter. Considering the first test, four forces were applied to the boxes (1)(3), being equivalent to the weight of the batteries and electronics present on the actual robot. Resulting equivalent stress images show that maximum value is only reached on infinitesimal points. By definition, equivalent stress is used for general understanding of the structure. Besides being more complete, the several variables involved make it difficult to obtain dimensioning values. Engineers instead rely on Von Mises criterium, based on infinitesimal part rotation, to solve that problem. In both situations it is possible to see that platform is far from its mechanical breakpoint. This last statement can be confirmed with safety factor image which shows, using colors, the distance till the breaking point is reached. Similar results were obtained for the tests carried out on the transmission units and wheels, with forces applied vertically and laterally on the lower side of the rim (4).

The present invention was also tested qualitatively by analyzing the system performance on a typical use case scenario. For this, the robot was teleoperated throughout a variety of terrains, including concrete and cobbled pavement, loose gravel, grass, tight vegetation, dirt tracks and dust sand. During field tests, the robot navigate flawlessly over the several types of terrain, proven to adapt correctly to bumps, and successfully trespassed vertical obstacles up to 30 cm and 45° inclined slopes.

### Preferred embodiment of the invention

In a preferred embodiment, the present invention is equipped with a central joint (2) with a presentable angle of rotation: the desired angle is obtained through the application of one of the mechanical cams listed below, which impose the physical limit to the rotation. To perform the cam exchanges, the screws need to be changed (5 mm hex wrench required).

The steering unit is coupled directly (no torque limiter (9)) with a secondary reduction gear (10) (11). In order to be able to use the maximum performance (for example to free a stuck wheel), the dimensioning of the toothed wheels has been done using the maximum torque supplied by the engine Maxon EC45 136 198 (0965 Nm stall) that goes beyond the maximum torque allowed by the manufacturer (or 58 Nm> 45 Nm for intermittent stress) for the output shaft Maxon GP52 C 223 593 (i = 81). The secondary's transmission ratio is 2:1, the gear wheels are the type with straight teeth, module 2, made of stainless 37Cr4 quenched. The teeth are hardened with hardness of 58 HRC minimum. The maximum torque to the wheel expressed net of returns and stall conditions (almost static) is approximately 114 Nm, corresponding to a horizontal force to the outer edge of the tire (5) of approximately 35 daN. The reversibility of the complete transmission guarantees the free positioning of the wheel (motor-free brake and non-powered) while providing the same in the longitudinal direction of the robot, lockable by means of its latch. The angular position is detected by a single-turn absolute encoder mod. ENA28F (flange version) of Megatron. For the fastening of the shaft encoders two grains are arranged at 90°. The correct angular positioning can be achieved by blocking the assembly encoder pre-positioned at "0" when the rotation group has reached its mechanical limit. The entire transmission unit is sealed with an O-ring on the base and at the junction with the wheel hub (16). For the passage of the cable a hole M12x1.5 has been provided, for mounting gland IP65 M12 (but alternatively a resin seal can be performed).

The robot of the present invention has a maximum width of 847 mm (< 850 mm), including the selected tires (5). The mechanical structure of the robot is manufactured almost entirely of aluminum alloys, corresponding to approximately 84% of its weight. For welded structures alloy 6082 T6 was used and for parts machined by machine tool alloy 7075-T6 was used.

In relation to the overall dimensions permitted, the wheels are arranged so as to maximize stability. The construction, essentially symmetric, moves the center of mass of the naked car (without batteries and load) approximately in the middle joint. The ground elevation of the chassis is theoretically 204.3 mm (> 200 mm), while the transmission arms (6)(12) are off the ground at 191.3 mm. These measurements may be modified by a different choice of tires (5), tire pressure and load transported.

The motor Maxon EC45 136 210 has a nominal speed of 8380 rpm (9090 rpm in vacuum at 24 Vdc); the gearbox Maxon GP62A 110 504 i = 71 is combined with a reduction bevel is = 2 for a reduction ratio total ic = 142 corresponding to 0983 rev/s, (Øext = 622.6 mm) ; the nominal theoretical speed is 6.925 km/h, with the chosen tires.

On a slope of 45° in the direction of travel and a total load of 115 kg (85 kg robot +60/2 kg), taking into account the efficiency of the gearbox Maxon (70% max), the secondary reduction 1:2 bevel (92% approximately) and some losses of rolling friction wheel-ground (approximately 5% with smooth flooring), the torque required of the engine is > 0.66 Nm, corresponding to an approximate speed of 2.3 km/h (extracted from the characteristic curve of the engine). Under these conditions the motors (7)(8) operate in overload and consequent thermal stress.

The EC45 136210 Maxon Motor is able to offer a torque of 4.18 Nm, corresponding to a torque on the outside shaft of 207 Nm, greater than the intermittent value of 75 Nm admitted. For this reason, the design provides an adjustable torque, with a maximum value compatible with the performance reported by Maxon for its gear. In this configuration, the maximum torque to the shaft rotation is approximately 150 Nm before the intervention of the limiter; that results in a drag force to the ground (net of the efficiency) of 46 daN and, therefore, able to lift the wheel facing a vertical obstacle, at speeds very close to zero and for a very short time. The torque (9) limitation is obtained turning the screw in the center of the wheel hub (16). The screw is turned counterclockwise with an 8 mm hex wrench to apply a torque of 30 Nm for obtaining the value of the maximum tripping torque (approximately 150 Nm) . It is rotated clockwise until it stops to free the wheel completely. Intermediate values of torque can be obtained by tweaking the screw between the extremes described. Once the operative torque of a wheel has been selected, the number of laps since the condition of mechanical stop (free wheel) is counted and the same is done on the remaining wheels. In order to increase performance at the expense of reliability, a spacer (not supplied with the prototype) can be placed on the limiter, which disables its action.

The payload transported (including batteries) is > 60 daN, but the generous sizing of all components (verified by 4g per MIL-STD-1791) allows increasing the payload to 100 kg, accepting the consequent reduction of autonomy and performance.

For lifting and handling, 4 holes Ø11(14) have been prepared on the 4 upper transmission arms (6) of the wheels. It is possible to mount on them male M10 eyebolts with nuts. Alternatively, M10 threaded inserts can be mounted. The 4 steering groups are provided with a pin for wheel locking in the aligned configuration with the robot. Also, the wheel hubs are equipped with a mechanical release system which allows free rotation. The aluminum wheels are mounted on hubs through key socket head screws, e.g. 6 mm. The present invention's surfaces are smooth and rounded and have no sharp edges.

The solution is easy to set up and very sturdy (it can withstand repeated impacts and shocks). The central joint (2) has been tested to a vertical load of 4 x 145 kg (theory weight = 85 kg robot + 60 kg payload + batteries), according to the standard MIL-STD-1791 Designing for internal aerial delivery in fixed wing aircraft. The central joint is created with a hole of Ø55 mm to allow the crossing of the electrical connectors as required. On the joint is mounted a single-turn encoder MAB25A Megatron with multiplicative ratio 4:1 (gears M1, 5 z72/z18). To adjust the teeth clearance, the screw is turned (5 mm hexagonal key). It is possible to adjust the encoder phase by acting on the screws, rotating the ring gear (5 mm hexagonal key). In order to achieve a watertight seal between the central pivot and the sleeve coupling an O-ring seal has been inserted. It is necessary every time that the joint is assembled to lubricate the seal with thick silicone, non-washable lubricant, and periodical checks are required to preserve the integrity of the internal mechanics from the attack of water and dust.

The chassis of the present invention is composed of two boxes (1)(3) hermetically closed to the outside and communicating centrally through the hole Ø55 of the central hub for any electrical connections. Each box (BoxA - BoxB) has a drawer on PVC guides for the insertion of the battery packs. To open the drawer, remove the 8 screws perimeter flange (hex wrench 4 mm) and remove the closure wall slowly to 250 mm; above this level the guides are no longer able to support the weight of the battery and the drawer must be removed completely. For disconnection of the battery and/or replacement, it is suggested to use connection cables that are long enough to accept the complete extraction of the drawer. Also, while opening the drawer, it is important to make sure that the O-ring seal is intact and firmly fixed in its place.

All transmission gears are enclosed in a sealed metal box and therefore cannot be reached. The circles are lenticular type. It was not possible, for obvious reasons, to segregate the area swept by the wheel during steering (see note on "Risk Assessment") .

Boxes A and B can contain each, with the current size, a LiFePO4 battery type of ABM mod.RFE-8F60 24 V x 60 Ah = 1440 Wh dim. 195x150x295 mm, 16kg. It is possible to mount battery packs with other performances and shape as long as they are contained in the drawer, assuming that:
- Overall efficiency mechanical transmission = 0.63
- Friction of rolling (on flat, horizontal and smooth surfaces) = 5% (experimentally verified)
- Maximum electrical efficiency of the motor = 85%
- Electric Motor Drive Efficiency = 85%
- Weight at full load = 145 kg (85 +60).
The consumption of power is approximately 350 W, and therefore the theoretical duration limit is 4 hours with a single battery (for example only the battery in box A). This upper limit is not really reachable, because the assumed capacity of the batteries is calculated on a current consumption of 20% of the rated value, i.e., in the case treated at 12 A, corresponding to only 288 W absorbed against the 350 W required calculated.

It is possible to provide on the sides or the top of boxes A and B some holes for the installation of watertight sockets for charging battery packs. This operation can be performed conveniently at the time of execution of the board system and so after the mechanical building.

The structure supports up to two batteries, which can be connected independently (for example one for traction and the other to feed the electrical components), or interconnected in parallel or in series.

To protect the components some O-rings were mounted on:
- Central joint (2);
- Steering gear box unit;
- Covers drawer boxes A and B.

All bearings are 2RS (rubber seal and double lifetime lubrication). However, to reduce losses of friction during the movement of the machine, elastic sealants (mastics) on the outside of the wheel hub (16) bearings have been used for the mounting: this is also to avoid the introduction of additional seals on the shaft. For an extreme use, it is recommended to protect the exposed bearing surfaces with specific enamel. Unpainted parts are protected through galvanization.

Tests have involved all the components built and the reliability of the dimensioning of the components. In particular, the following two cases were taken into consideration:
a) the overall transmission unit, steering group and support arms, including wheel;
b) the overall boxes A and B (1)(3) and central joint (2) group.

These assemblies were subjected to a vertical load (working condition typical) equal to the maximum nominal (85 daN robot + 60 daN payload) multiplied by 4 (equivalent acceleration of 4g). The result confirms the generous size of all the details. In case a) a test was also performed for horizontal load on the rim (4) (collision and rollover) applying 3000 N on a small area of the board: even in such stressful conditions, the safety factor is > 1 (1.236).

### Additional information:

| | |
|---|---|
| **Length** | L=1529.6 mm wheels included* |
| | L1= 931mm between covers box A and B |
| | L2= 907.67 mm wheelbase longitudinal |
| | L3= 636 mm wheelbase transverse |
| **Width** | 847 mm ca. wheels included* |
| **Height** | 630 ca. mm from the head of Maxon EC45 136210 engine* |
| **Ground elevation** | 204.3 mm chassis* |
| | 191.3 mm wheels arms* |
| **Wheels** | 19" x 1.6" rim |
| | 70-19 off-road tire (Michelin Starcross MH3 Junior speed M=130 km/h, load index 42=150 kg), maximum nominal diameter 622 mm |
| **Weight** | 85 kg excluding batteries and additional loads |
| **Traction power** | 1000 W (4x250W) |
| **Steering power** | 600 W (4x150W) |
| **Maximum Speed** | 7 km/h |
| **Maximum Slope** | 45° with 30 kg load (batteries included) |
| **Payload** | 60 kg nominal charge (batteries included) ; |
| | in alternative 100 kg max (batteries included); slope 25% ca. |
| **Steering angle** | -45°+90° |
| **Central joint range** | max +/-30°, adjustable by step of 10° |

| | |
|---|---|
| *Depends on the tires chosen | |

### Description of the figures

### Indication of reference numbers:

- (1): Box A (battery and encoder core);
- (2): Central joint;
- (3): Box B (battery);
- (4): Rim;
- (5): Tire (carded);
- (6): Upper transmission arm;
- (7): Motor (steering);
- (8): Motor (traction);
- (9): Torque limiter;
- (10): Secondary reduction gear (traction);
- (11): Secondary reduction gear (steering);
- (12): Lower transmission arm;
- (14): Ø11 mm holes;
- (16): Wheel hub.

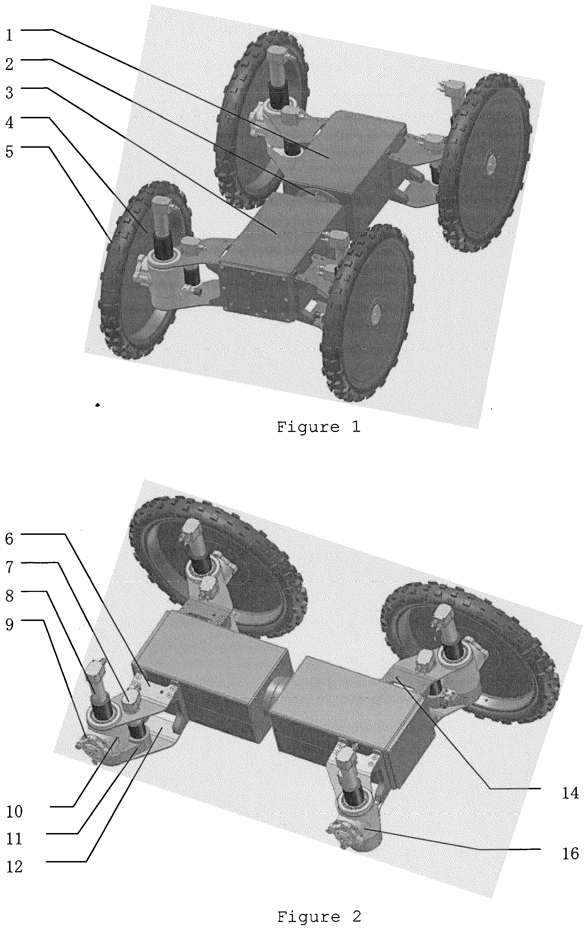

- Figure 1: - Mechanical Platform (isometric view).
- Figure 2: - Detail of the transmission arms.

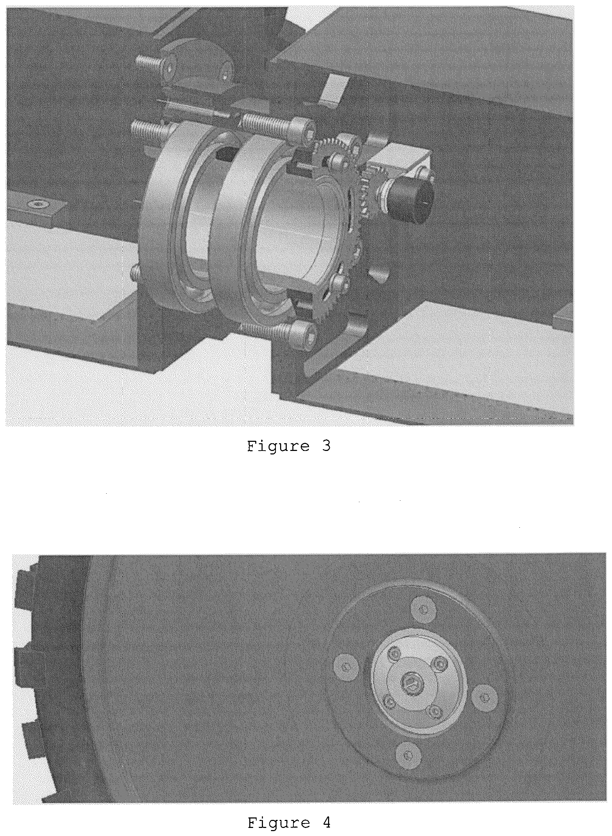

- Figure 3: - Detail of the central joint.
- Figure 4: - Detail of wheel.

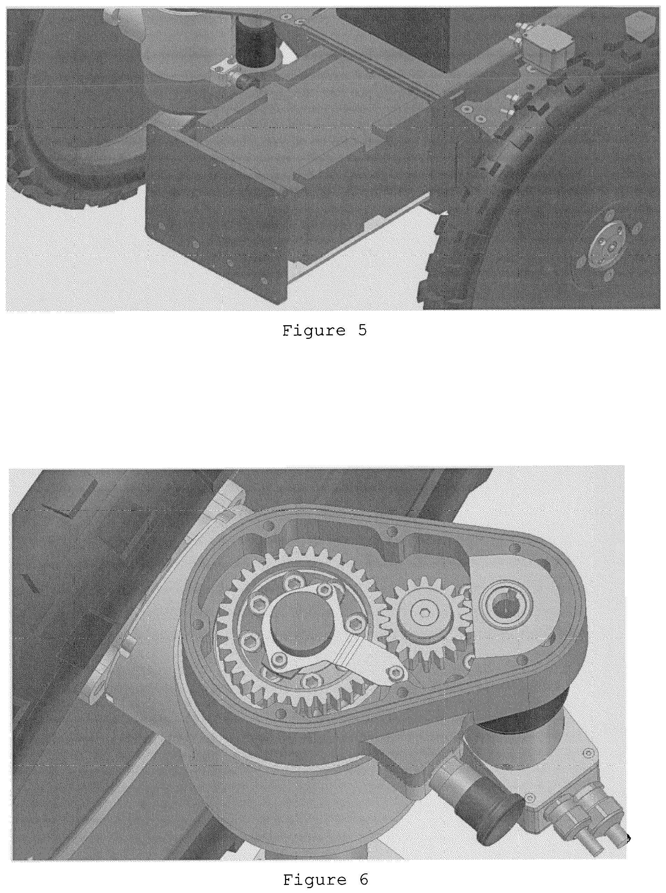

- Figure 5: - Detail of box B.
- Figure 6: - Detail of the secondary steering reduction gear.

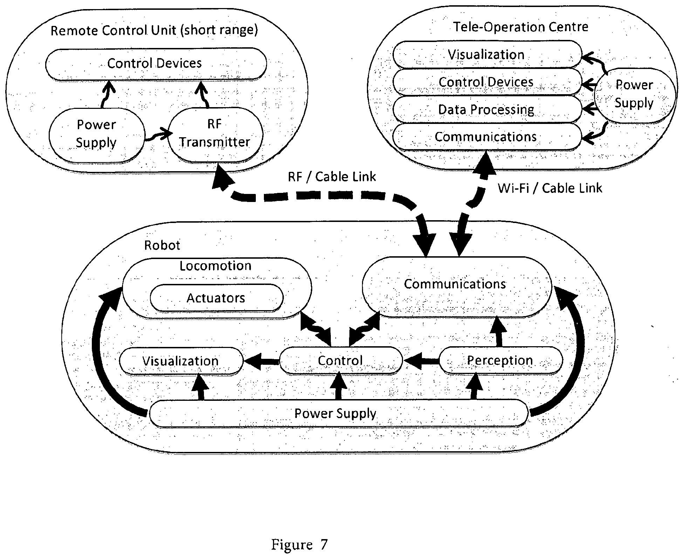

- Figure 7: - Hardware architecture.

## Claims

1. All-terrain and autonomous robot comprising a locomotion system comprising four wheels controlled independently in relation to both steering and traction, a transmission gears enclosed in sealed metal boxes, **a** chassis composed of two boxes, box A (1) and box B (3), batteries, **a** main processing unit, internal sensors, a global position system (GPS) device, **an inertial measurement** unit **and a steering unit characterized in that** :
a) each wheel of the locomotion system comprises a hand locking and a manual clutch;
b) the two boxes, box A (1) and box B (3), are hermetically closed to the outside and communicating centrally through the hole of the central hub for any electrical connections;
c) **the** inertial measurement unit is composed of a set of accelerometers and three-dimensional gyroscopes;
**d) the main processing unit is composed of industrial board and embedded software;**
e) **the** steering unit is coupled with secondary reduction gears (10)(11); **and** further **characterized in that** the robot further comprises:
f) a central joint (2) connecting the boxes (1) (3) and transmission arms (6)(12) bearing the wheels, sealed with a rubber ring at the base and wheel hub (16) junction;
d) a laser unit mounted on a servo drive;
e) a ring of ultrasonic sensors;
**f) a closed video circuit.**

2. Robot according to claim 1, wherein it **further** comprises:
a) helical gears of hardened stainless steel;
b) maximum torque of 114 Nm at the wheel;
c) hole for routing data cables and power for the encoder;
d) wheels with symmetrical construction, with center of mass of the structure on central axis with ground elevation of 0.2043 m in the central part and 0.1913 m in the area of the transmission arms (6)(12);
e) four holes (14) on the upper transmission arms (6);
f) **the** wheel hub (16) **has** a mechanical release system;
g) alloy rims;
h) rubber ring;
i) elastic seals on the outside of the wheel hub (16).

3. Robot according to claim 1, wherein the closed circuit video has signals with two types of video feed, one composed by several small cameras, and the other by a pan, tilt and zoom (PTZ) camera.

4. Robot according to claim 1, wherein **it further comprises** a computer, a screen and a pair of joysticks.

5. Robot according to claim 1, wherein **it further comprises** a short-range remote control.

6. Robot according to claim 1, wherein it comprises a set of internal sensors for monitoring the temperature, applied voltage, current consumption and battery level.

7. Robot according to claim 1, wherein the chassis is made of aluminum.

8. Robot according to claim 1, wherein each box (1) (3) has a drawer on PVC guides for the insertion of the battery packs.

9. Robot according to claim 6, wherein the boxes (1) (3) comprises on the sides or on the top some holes for the installation of watertight sockets for charging battery packs.

10. Robot of claim 1, wherein it comprises lines of various voltages available directly in the same connectors as used for data transmission.

11. Robot according to claim 1, **wherein the robot has** a maximum width of 0.847 m.

12. Robot according to claim 1, wherein the batteries are connected independently or are interconnected in parallel or in series.

13. Robot according to claim 1, **wherein it further comprises** O-rings mounted on the central joint (2), **a** steering gear box unit and covers of the drawers of the boxes (1) (3) .

## Patentansprüche

1. Geländegängiger und autonomer Roboter, bestehend aus einem Fortbewegungssystem mit vier unabhängig in Bezug auf Lenkung und Traktion gesteuerten Rädern, einem in versiegelten Metallkästen eingeschlossenen Getriebe, einem Fahrgestell aus zwei Kästen, Kasten A (1) und Kasten B (3), Batterien, **eine** Hauptverarbeitungseinheit, interne Sensoren, ein globales Positionsbestimmungssystem (GPS) Vorrichtung, **eine Trägheitsmesseinheit** und **eine Lenkeinheit dadurch gekennzeichnet, dass**:
a) jedes Rad des Lokomotivensystems umfasst eine Handverriegelung und eine Handkupplung;
b) die zwei Kästen, Kasten A (1) und Kasten B (3), sind nach außen hermetisch abgeschlossen und kommunizieren für jegliche elektrischen Verbindungen zentral durch das Loch der zentralen Nabe;
c) **die** Trägheitsmesseinheit besteht aus einem Satz von Beschleunigungsmessern und dreidimensionalen Gyroskopen;
d) **die Hauptverarbeitungseinheit besteht aus Industrieplatine und eingebetteter Software;**
e) **die** Lenkeinheit ist mit sekundären Untersetzungsgetrieben (10) (11) gekoppelt;
**und** ferner **dadurch gekennzeichnet, dass** der Roboter ferner umfasst:
f) ein zentrales Gelenk (2), das die Kästen (1) (3) und die die Räder tragenden Übertragungsarme (6) (12) verbindet und mit einem Gummiring an der Basis und Radnabenverbindung (16) abgedichtet ist;
d) eine Lasereinheit, die auf einem Servoantrieb montiert ist;
e) einen Ring von Ultraschallsensoren;
f) **ein geschlossener Videokreislauf.**

2. Roboter nach Anspruch 1, **dadurch gekennzeichnet, dass** er **weiterhin** umfasst:
a) Schrägverzahnungen aus gehärtetem Edelstahl;
b) maximales Drehmoment von 114 Nm am Rad;
c) Loch zum Verlegen von Datenkabeln und Strom für den Encoder;
d) Räder mit symmetrischem Aufbau, deren Schwerpunkt auf der Mittelachse liegt und deren Bodenhöhe im Mittelteil 0,2043 m und im Bereich der Übertragungsarme (6) 0,1913 m beträgt (12);
e) vier Löcher (14) an den oberen Übertragungsarmen (6);
f) **die** Radnabe (16) **hat** ein mechanisches Ausrücksystem;
g) Leichtmetallfelgen;
h) Gummiring;
i) elastische Dichtungen an der Außenseite der Radnabe (16).

3. Roboter nach Anspruch 1, wobei das Video mit geschlossenem Stromkreis Signale mit zwei Arten von Videoeinspeisung aufweist, von denen eine aus mehreren kleinen Kameras und die andere aus einer Schwenk-, Neige- und Zoom-Kamera (PTZ-Kamera) besteht.

4. Roboter nach Anspruch 1, wobei **er ferner** einen Computer, einen Bildschirm und ein Paar Joysticks **umfasst.**

5. Roboter nach Anspruch 1, wobei **er ferner** eine Kurzstreckenfernbedienung **umfasst.**

6. Roboter nach Anspruch 1, wobei er einen Satz interner Sensoren zum Überwachen der Temperatur, der angelegten Spannung, des Stromverbrauchs und des Batterieladezustands umfasst.

7. Roboter nach Anspruch 1, wobei das Chassis aus Aluminium besteht.

8. Roboter nach Anspruch 1, wobei jeder Kasten (1) (3) eine Schublade auf PVC-Führungen zum Einsetzen der Batteriepacks aufweist.

9. Roboter nach Anspruch 6, wobei die Kästen (1) (3) an den Seiten oder an der Oberseite einige Löcher für die Installation von wasserdichten Sockeln zum Laden von Batteriepacks aufweisen.

10. Roboter nach Anspruch 1, wobei er Leitungen mit verschiedenen Spannungen umfasst, die direkt in den gleichen Verbindern verfügbar sind, die für die Datenübertragung verwendet werden.

11. Roboter nach Anspruch 1, **wobei der Roboter eine** maximale Breite von 0,847 m **hat.**

12. Roboter nach Anspruch 1, wobei die Batterien unabhängig voneinander verbunden sind oder parallel oder in Reihe geschaltet sind.

13. Roboter nach Anspruch 1, wobei **es ferner** O-Ringe, die an dem Mittelgelenk (2) angebracht sind, **eine** Lenkgetriebeeinheit und Abdeckungen der Schubladen der Kästen (1) (3) **aufweist.**

## Revendications

1. Robot tout-terrain et autonome comprenant un système de locomotion composé de quatre roues commandées indépendamment en ce qui concerne la direction et la traction, une transmission par engrenages enfermés dans des boîtes métalliques étanches, **un** chassis composé de deux boîtes, la boîte A (1) et la boîte B (3), des batteries, **une** unité de traitement principale, des capteurs internes, un système de positionnement global (GPS), **une** unité **de mesure inertielle** et **une unité de direction caractérisé en ce que**:
a) chaque roue du système de locomotion comporte une serrure à main et un embrayage manuel;
b) les deux boîtes, la boîte A (1) et la boîte B (3), sont hermétiquement fermés vers l'extérieur et communiquent centralement par le trou du moyeu central, pour tout les connexions électriques;
c) **l'**unité de mesure inertielle est composée d'un ensemble des accéléromètres et des gyroscopes tridimensionnels;
d) **l'unité de traitement principale est composée de logiciel encastré en panneau industriel;**
e) **l'**unité de direction est couplée à des engrenages secondaires de réduction (10) (11);
**et caractérisé en outre en ce que** le robot comprend en outre:
f) un joint central (2) reliant les boîtes (1) (3) et des bras de transmission (6) (12) portant les roues, étanches avec un anneau en caoutchouc à la base et en jonction du moyeu de roue (16);
d) une unité laser montée sur un servo-entraînement;
e) un anneau de capteurs à ultrasons;
f) **un circuit vidéo fermé.**

2. Robot selon la revendication 1, dans lequel il comprend **en outre:**
a) des engrenages hélicoïdaux en acier inoxydable trempé ;
b) un couple maximal de 114 Nm à la roue;
c) un trou pour l'acheminement des câbles de données et d'énergie pour le encodeur;
d) roues à construction symétrique, avec centre de masse de la structure sur l'axe central avec élévation du terrain de 0,2043m dans la partie centrale et de 0,1913m dans la zone des bras de transmission (6)(12);
e) quatre trous (14) sur les bras de transmission supérieurs (6);
f) **le** moyeu de roue (16) **est doté** d'un système de déverrouillage mécanique;
g) des jantes en alliage;
h) anneau en caoutchouc;
i) des joints élastiques sur la face extérieure du moyeu de roue (16).

3. Robot selon la revendication 1, dans lequel le circuit vidéo fermé a des signaux avec deux types de alimentation vidéo, un composé de plusieurs petites caméras, et l'autre par une caméra panoramique, inclinable et avec zoom ("Pan, Tilt and Zoom - PTZ").

4. Robot selon la revendication 1, dans lequel **il comprend en outre** un ordinateur, un écran et une paire de joysticks.

5. Robot selon la revendication 1, dans lequel **il comprend en outre** une télécommande à courte portée.

6. Robot selon la revendication 1, dans lequel il comprend un ensemble de capteurs internes pour la surveillance de la température, la tension appliquée, la consommation de courant et le niveau de la batterie.

7. Robot selon la revendication 1, dans lequel le châssis est fait d'aluminium.

8. Robot selon la revendication 1, dans lequel chaque boîte (1) (3) a un tiroir sur des guides en PVC pour l'insertion du bloc-batterie.

9. Robot selon la revendication 6, dans lequel les boîtes (1) (3) comprend, sur les côtés ou sur le dessus, des trous pour le installation de prises étanches pour la charge du bloc-batterie.

10. Robot selon la revendication 1, dans lequel il comprend des lignes de différentes tensions disponibles directement dans les mêmes connecteurs que ceux utilisés pour la transmission des données.

11. Robot selon la revendication 1, **dans lequel le robot a** un largeur maximale de 0,847m.

12. Robot selon la revendication 1, dans lequel les batteries sont connectés indépendamment, ou sont interconnectés en parallèle ou en série.

13. Robot selon la revendication 1, **dans lequel il comprend en outre** des joints toriques montés sur le joint central (2), **une** unité de boîte de direction et des couvercles pour les tiroirs des boîtes (1) (3).
